# EUROPEAN PATENT APPLICATION

(11) **EP 1 905 494 A1**
(43) Date of publication of application: **02.04.2008**
(21) Application number: 06767610.6
(22) Date of filing: 29.06.2006
(51) Int. Cl.: A63F 13/12, A63F 13/00

(54) **NETWORK GAME SYSTEM, NETWORK GAME SYSTEM CONTROL METHOD, GAME MACHINE, GAME MACHINE CONTROL METHOD, AND INFORMATION STORAGE MEDIUM**

(30) Priority: 29.06.2005 JP 2005190328; 22.12.2005 JP 2005371119
(71) Applicant: Konami Digital Entertainment Co., Ltd., Tokyo 107-8324 (JP)
(72) Inventor: ASHIDA, Hiroyuki c/o Konami Digital Entertainment Co., Ltd., Minato-ku, Tokyo 1078324 (JP); OSATO, Shintaro c/o Konami Dig. Enter. Co., Ltd., Minato-ku, Tokyo 1078324 (JP); WAKUDA, Hajime c/o Konami Dig. Enter. Co., Ltd., Minato-ku, Tokyo 1078324 (JP); SHIMADA, Takahiko c/o Konami Dig. Enter. Co., Ltd., Minato-ku, Tokyo 1078324 (JP); FUKUSHIMA, Keigo c/o Konami Dig. Enter. Co., Ltd., Minato-ku, Tokyo 1078324 (JP); ESAKA, Hiroyuki c/o Konami Dig. Enter. Co., Ltd., Minato-ku, Tokyo 1078324 (JP); OKINO, Tsuyoshi c/o Konami Dig. Enter. Co., Ltd., Minato-ku, Tokyo 1078324 (JP); SHIMOMURA, Ken c/o Konami Dig. Enter. Co., Ltd., Minato-ku, Tokyo 1078324 (JP); OTOMI, Makiko c/o Konami Dig. Enter. Co., Ltd., Minato-ku, Tokyo 1078324 (JP); YATA, Kenichi c/o Konami Dig. Enter. Co., Ltd., Minato-ku, Tokyo 1078324 (JP); NISHIMURA, Shuho c/o Konami Dig. Enter. Co., Ltd., Minato-ku, Tokyo 1078324 (JP); FUMINO, Tomoyuki c/o Konami Dig. Enter. Co., Ltd., Minato-ku, Tokyo 1078324 (JP)
(74) Representative: Müller-Boré & Partner Patentanwälte
(86) International application number: PCT/JP2006/312993
(87) International publication number: WO 2007/001050

(57) **Abstract**

To provide a network game system for sharing, among a plurality of game machines, the positions and postures of objects associated with the game machines, while suppressing an increase in traffic in the communication network. Each of the game machines comprises a first base position selection unit for selecting one of the plurality of base positions; a first base position transmission unit for transmitting the base position selected by the first base position selection unit to another game machine; a first base position receiving unit for receiving the base position transmitted by the first base position transmission unit from another game machine (10); a second base position selection unit for selecting one of the base positions received by the first base position receiving unit; an own object position determination mans for determining a position of an object associated with the game machine (10) based on the base position selected by the first base position selection unit; and an own object posture determination unit for determining posture of the object associated with the game machine (10) based on the base position selected by the second base position selection unit.

## Description

### TECHNICAL FIELD

The present invention relates to a network game system, a control method for the network game system, a game machine, a control method for the game machine, and an information storage medium, and in particular to sharing of the positions and postures of the objects in the network game and to a user interface of the game machine.

### BACKGROUND ART

There is known a network game in which a plurality of game machines are connected via a network to share a virtual space. In the network game of this type, a plurality of objects associated with the respective game machines are placed in the virtual space, and the respective game machines update the positions and postures of the associated objects thereof based on the game operation carried out by the respective players and send the updated information to other game machines.

### DISCLOSURE OF THE INVENTION

### Problems to be Solved by the Invention

In the above-described network game, sharing the positions and postures of the respective objects by the plurality of game machines leads to a problem of a remarkable increase in traffic in the communication network.

Regarding movement of an object in the virtual space, in some game machines, a moving direction is instructed using a direction key formed on the controller, and in other game machines, the object is moved ahead in the virtual space by the player stepping on the foot pedal. However, the former type requires the direction keys to be operated, which is troublesome. In particular, in a gun shooting game, the player cannot readily operate the direction key at the same time when operating a gun-shaped controller. Meanwhile, the latter type has a problem that the object can be moved only in a limited direction in the virtual space.

The present invention has been conceived in view of the above, and a first object thereof is to provide a network game system, a control method of the network game system, a game machine, a control method for the game machine, and an information storage medium for sharing a position and posture of an object associated with the game machine by the plurality of game machines while suppressing an increase in traffic in the communication network.

A second object of the present invention is to provide a game machine, a control method for the game machine, and an information storage medium for moving an object in a desired direction in the virtual space.

### Means for Solving the Problems

In order to address the above-described problems, according to one aspect of the present invention, there is provided a network game system containing a plurality of game machines connected to a communication network, which share a virtual space where a plurality of objects associated with any of the plurality of game machines are placed and a plurality of base positions are defined, wherein, each of the game machines comprises first base position selection means for selecting one of the plurality of base positions; first base position transmission means for transmitting the base position selected by the first base position selection means to another game machine; first base position receiving means for receiving the base position transmitted by the first base position transmission means from another game machine; second base position selection means for selecting one of the base positions received by the first base position receiving means; own object position determination mans for determining a position of an object associated with the game machine based on the base position selected by the first base position selection means; and own object posture determination means for determining posture of the object associated with the game machine based on the base position selected by the second base position selection means.

According to another aspect of the present invention, there is provided a control method for a network game system containing a plurality of game machines connected to a communication network, which share a virtual space where a plurality of objects associated with any of the plurality of game machines are placed and a plurality of base positions are defined, wherein, each of the game machines executes: a first base position selection step of selecting one of the plurality of base positions; a first base position transmission step of transmitting the base position selected at the first base position selection step to another game machine; a first base position receiving step of receiving the base position transmitted at the first base position transmission step from another game machine; a second base position selection step of selecting one of the base positions received at the first base position receiving step; an own object position determination step of determining a position of an object associated with the game machine based on the base position selected at the first base position selection step; and an own object posture determination step of determining posture of the object associated with the game machine based on the base position selected at the second base position selection step.

In the present invention, a plurality of base positions are defined in the virtual space. Each game machine selects one of the plurality of base positions (hereinafter referred to as a first base position), and transmits to another game machine. In addition, each game machine also selects one of the base positions selected by another game machine (hereinafter referred to as a second base position). The position and posture of the object is determined based on these base positions. That is, the position of the object associated with the game machine is determined based on the first base position, in which the position of the object may be the first base position itself or a position resulted by shifting the first base position by a predetermined shift amount. Further, the posture of the object associated with the game machine is determined based on the second base position. For example, the posture of the object may be determined so as to be directed to the second base position or a position resulted by shifting the second base position by a predetermined shift amount.

According to the present invention, as the degree of freedom in posture of each object is restricted due to the plurality of base positions defined in the virtual space, it is possible to share the positions and postures of the objects associated with the game machines among the plurality of game machines while suppressing an increase in traffic in the communication network. Also, according to the present invention, as the posture of each object is determined based on a base position used as a base in determining the position of other object, it is possible to set the posture of each object so as to be directed to the position associated with another object.

Each of the game machines may further comprise second base position transmission means for transmitting the base position selected by the second base position selection means to another game machine; other object position determination means for determining a position of an object associated with the other game machine based on the base position received by the first base position receiving means from the other game machine; and other object posture determination means for determining posture of the object associated with the other game machine based on the base position transmitted by the second base position transmission means from the other game machine. With the above, the position and posture of the object associated with another game machine can be preferably determined while suppressing an increase in traffic in the communication network.

Each game machine may further comprise shift amount input means for inputting a shift amount of the object associated with the game machine, and shift amount transmission means for transmitting the shift amount input by the shift amount input means to another game machine. In this case, the own object position determination means may determine a position of the object associated with the game machine based on the base position selected by the first base position selection means and the shift amount input by the shift amount input means. With the above, it is possible to place an object in a position displaced from the base position. In the above, when the shift amount is an upper-limited one or two dimensional amount, it is possible to place an object in a position displaced from the base position, while requiring a reduced data amount.

The own object posture determination means may determine the posture of the object associated with the game machine based on the base position selected by the second base position selection means and the position of the object.

The second base position selection means may select next one base position from among the base positions received by the first base position receiving means, based on a current position of the object associated with the game machine. With the above, the base position used as a base in determining the position of an object can be selected from those located around the object. In this case, the base position may be selected based further on the current posture of the object.

Each of the game machines may further comprise direction input means for inputting direction data by a player. In the above, the first base position selection means may select one of the plurality of base positions input by the direction input means. With the above, the player can select a base position placed in their desired direction.

The direction input means may comprise player's posture determination means for acquiring data indicative of the posture of the player, and direction data calculation means for calculating direction data indicative of a direction in the virtual space based on the data acquired by the player's posture determination means. With the above, the player can input a direction in the virtual space by changing their own posture.

In the above, the player's posture determination means may acquire, as data indicative of the posture of the player, data indicative of the position of a predetermined portion of the player. With the above, the player can input a direction in the virtual space by moving the position of their own predetermined portion (for example, the head).

In this case, the first base position selection means may select one of the plurality of base positions according to the direction data calculated by the direction data calculation means when the player executes some operation relative to a predetermined operating member. With the above, it is possible to arrange such that the position of the player's predetermined portion is not reflected in the direction data when the player does not operate a predetermined operating member, which can enhance the operability. It should be note that the operating member may be placed in a portion below the player's feet. With the above, the player can operate the operating member, using their own feet.

The player's posture determination means may comprise a ultrasonic transmitter for transmitting ultrasonic wave towards the player, a plurality of ultrasonic receivers for receiving, at separated positions, the ultrasonic wave transmitted from the ultrasonic transmitter and reflected by the player, and time measurement means for measuring respective periods of time elapsed after the ultrasonic transmitter transmits the ultrasonic wave and before the respective ultrasonic receivers receive the ultrasonic wave, and acquires data indicative of the posture of the player based on the respective periods of time measured by the time measurement means. With the above, it is possible to acquire data indicative of the player' s posture without touching the data player.

The network game system may further comprise game image production means for producing a game screen image containing a direction indicating image representative of a direction indicated by the direction data calculated by the direction data calculation means. With the above, which direction is input can be readily recognized.

The player's posture determination means may calculate data indicative of a shift amount of a position of the head of the player relative to a reference position as the data indicative of the position of the predetermined portion of the player, and the direction data calculation means may calculate direction data indicative of a direction according to the displacement of the position of the head of the player relative to the reference position. With the above, by moving the head with the reference position as a center, it is possible to input a direction even when a game stage is small.

According to still another aspect of the present invention, there is provided a game machine connected to a communication network, for sharing with another game machine connected to the communication network a virtual space where an object is placed, comprising position storage means for storing a plurality of base positions defined in the virtual space; base position selection means for selecting one of the plurality of base positions; base position receiving means for receiving the base position selected by the other game machine; position determination means for determining a position of the object based on the base position selected by the base position selection means; and posture determination means for determining posture of the object based on the base position received by the base position receiving means.

According to yet another aspect of the present invention, there is provided a control method for a game machine connected to a communication network, for sharing with another game machine connected to the communication network a virtual space where an object is placed, comprising a base position selection step of selecting one of the plurality of base positions; a base position receiving step of receiving the base position selected by the other game machine; a position determination step of determining a position of the object based on the base position selected at the base position selection step; and a posture determination step of determining posture of the object based on the base position received at the base position receiving step.

According to yet another aspect of the present invention, there is provided an information storage medium storing a program for causing a computer to function as: means for sharing a virtual space where an object is placed with other game device via a communication network; position storage means for storing a plurality of base positions defined in the virtual space; base position selection means for selecting one of the plurality of base positions; base position receiving means for receiving the base position selected by the other game machine; position determination means for determining a position of the object based on the base position selected by the base position selection means; and posture determination means for determining posture of the object based on the base position received by the base position receiving means. The computer may be, for example, a commercial game machine, a consumer use game machine, a portable game machine, a personal computer, various server computers, a portable data assistant, a portable phone, and so forth. The program may be stored in a computer readable information storage medium, such as a CD-ROM, a DVD-ROM, and so forth.

According to the present invention, as the degree of freedom in posture of an object is restricted due to the plurality of base positions defined in the virtual space, it is possible to share the positions and postures of the objects associated with the game devices by the plurality of game machines while suppressing an increase in traffic of the communication network.

According to yet another aspect of the present invention, there is provided a game machine in which a player moves an object placed in a virtual space, comprising player's posture determination means for acquiring data indicative of posture of the player; direction data calculation means for calculating direction data indicative of a direction in the virtual space based on the data acquired by the player's posture determination means; and game image production means for producing a game screen image showing a picture showing the object moving in the virtual space according to the direction data calculated by the direction data calculation means.

According to yet another aspect of the present invention, there is provided a control method for a game machine in which a player moves an object placed in a virtual space, comprising a player's posture determination step of acquiring data indicative of posture of the player; a direction data calculation step of calculating direction data indicative of a direction in the virtual space based on the data acquired by the player's posture determination means; and a game image production step of producing a game screen image showing a picture showing the object moving in the virtual space according to the direction data calculated by the direction data calculation means.

According to yet another aspect of the present invention, there is provided an information storage medium storing a program for causing a computer to function as player' s posture determination means for acquiring data indicative of posture of the player, direction data calculation means for calculating direction data indicative of a direction in the virtual space based on the data acquired by the player' s posture determination means, and game image production means for producing a game screen image showing the object moving in the virtual space, according to the direction data calculated by the direction data calculation means. The computer may be, for example, a commercial game machine, a consumer use game machine, a portable game machine, a personal computer, various server computers, a portable data assistant, a portable phone, and so forth. The program may be stored in a computer readable information storage medium, such as a CD-ROM, a DVD-ROM, and so forth.

According to the present invention, the player can input a direction in the virtual space by moving their own posture, to thereby move an object in that direction. That is, the player can readily move the object in their desired direction in the virtual space.

In the above, the player's posture determination means may acquire data indicative of a position of a predetermined portion of the player as the data indicative of the posture of the player. With the above, the player can input a direction in the virtual space by moving the position of their predetermined portion (for example, the head).

The game image production means may produce a game screen image showing a picture showing the object moving in the virtual space according to the direction data calculated by the direction data calculation means when the player executes some operation relative to a predetermined operating member. With the above, the object can be prevented from moving according to the player's posture when a predetermined operating member is not operated, which enhances the operability. It should be noted that the operating member may be placed in a portion below the player's feet. With the above, the player can operate the operating member, using their feet.

A plurality of base positions may be defined in the virtual space, and the game image production means may select one of the plurality of base positions according to the direction data calculated by the direction data calculation means and produces a game screen image showing the object moving in the virtual space towards the base position selected.

The player's posture determination means may comprise a ultrasonic transmitter for transmitting ultrasonic wave towards the player, a plurality of ultrasonic receivers for receiving, at separated positions, the ultrasonic wave transmitted from the ultrasonic transmitter and reflected by the player, and time measurement means for measuring respective periods of time elapsed after the ultrasonic transmitter transmits the ultrasonic wave and before the respective ultrasonic receivers receive the ultrasonic wave, and acquire data indicative of the posture of the player based on the respective periods of time measured by the time measurement means. With the above, it is possible to acquire the player's position without touching the player.

The game machine may further comprise game image production means for producing a game screen image containing a direction indicating image indicating a direction indicated by the direction data calculated by the direction data calculation means. With the above, the player can readily recognize which direction is input.

The player's posture determination means may calculate data indicative of a shift amount of the position of the head of the player relative to a reference position as the data indicative of the position of the predetermined portion of the player, and the direction data calculation means may calculate direction data describing a direction according to displacement of the position of the head of the player relative to the reference position. With the above, by moving the head with the reference position as a center, it is possible to input a direction when a game stage is small.

### BRIEF DESCRIPTION OF THE DRAWINGS

Fig. 1 is a perspective view showing an external appearance of a game machine according to an embodiment of the present invention;
Fig. 2 is a diagram showing a complete structure of a network shooting game system according to the embodiment of the present invention;
Fig. 3 is a diagram showing one example of a game screen image;
Fig. 4 is a diagram showing a hardware structure of the game machine;
Fig. 5 is a functional block diagram of the game machine;
Fig. 6 is a diagram showing a plurality of base positions defined in a virtual three dimensional space;
Fig. 7 is a diagram illustrating a method for determining a position and posture of a player character object;
Fig. 8 is a diagram explaining a method for determining the posture of the player;
Fig. 9 is a diagram showing a structure of position data of the player character object;
Fig. 10 is a diagram showing a direction in which to change a base position (a placement reference position);
Fig. 11 is a diagram showing a structure of trajectory data of a bullet object;
Fig. 12 is a diagram illustrating a method for correcting the trajectory data;
Fig. 13 is a diagram showing one example of a game screen image containing a moving direction indicator image;
Fig. 14 is a diagram exhibiting a relationship between direction data about a moving direction of the player character and the player's posture;
Fig. 15 is a diagram illustrating another procedure to change a base position (a placement reference position);
Fig. 16 is a perspective view showing an external appearance of a game machine according to a modified example;
Fig. 17 is a diagram illustrating a procedure to change a base position (a placement reference position) in the modified example;
Fig. 18 is a display explaining a method for displaying a paint mark on a static object;
Fig. 19 is a display explaining a method for displaying a paint mark on a static object;
Fig. 20 is a display explaining a method for displaying a paint mark on a static object;
Fig. 21 is a display explaining a method for displaying a paint mark on a static object;
Fig. 22 is a display explaining a method for displaying a paint mark on a static object;
Fig. 23 is a display explaining a method for displaying a paint mark on a static object;
Fig. 24 is a display explaining a method for displaying a paint mark on a static object;
Fig. 25 is a display explaining a method for displaying a paint mark on a moving object;
Fig. 26 is a display explaining a method for displaying a paint mark on a moving object;
Fig. 27 is a display explaining a method for displaying a paint mark on a moving object; and
Fig. 28 is a display explaining a method for displaying a paint mark on a moving object.

### BEST MODE FOR CARRYING OUT THE INVENTION

In the following, one embodiment of the present invention will be described in detail based on the following drawings.

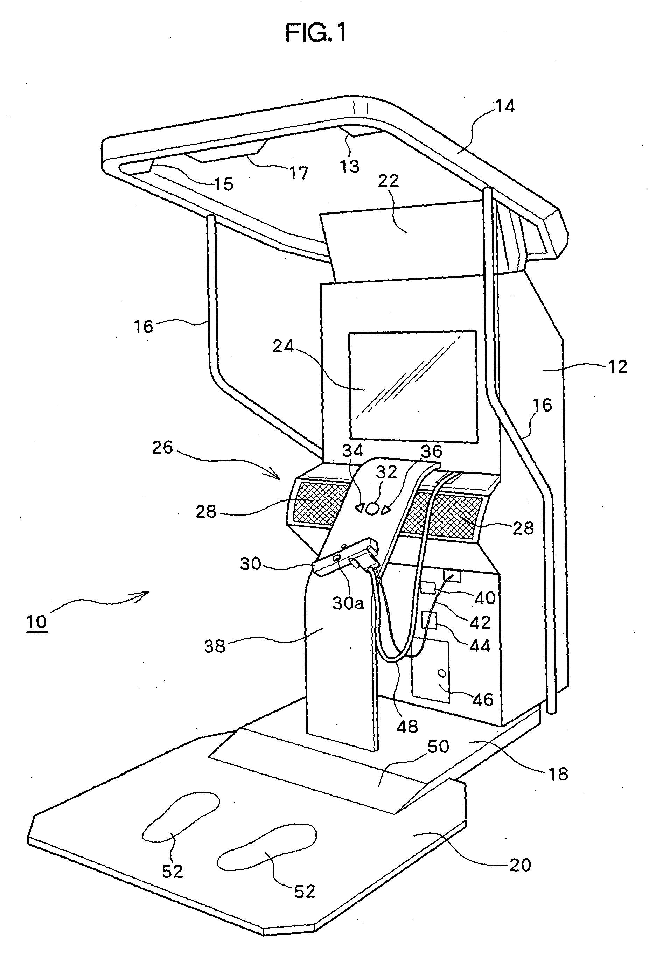

Fig. 1 is a perspective view showing an external appearance of a game machine according to one embodiment of the present invention. The game machine 10 shown is a commercial machine to be installed in various game halls and has a pedestal 18 attached below an enclosure 12, which extends forward from there. The pedestal 18 has a game stage 20 attached to the tip end portion thereof, which is thinner than the pedestal 18. A footprint 52 is printed in the middle of the game stage 20 so that the player standing on the footprint 52 is directly opposed to the enclosure 12.

The foremost portion of the pedestal 18, where the game stage 20 is attached, is formed sloping where a foot controller 50 is provided. A pressure sensor is incorporated in the foot controller 50, so that when the player standing on the game stage 20 puts their right or left foot forward and steps on the foot controller 50, such movement of the player is notified to the inside of the machine.

The enclosure 12 is taller than a typical adult and has a substantially rectangular frame 14 mounted at the upper portion thereof. The frame 14 is mounted slightly inclining so that the front portion thereof is placed higher than the rear portion thereof. The rear portion of the frame 14 is fixedly mounted to the top end of the enclosure 12 and also to the top ends of a pair of support bars 16 installed on the respective right and left sides of the enclosure 12. The pair of support bars 16 are fixed to the right and left side surfaces of the enclosure 12. An ultrasonic transmitter 17 and ultrasonic receivers 13, 15 are attached to the front portion of the frame 14. Specifically, the ultrasonic receiver 15 is located to the upper left of the player facing the enclosure 12; the ultrasonic receiver 13 is located to the upper right of the player facing the same; and the ultrasonic transmitter 17 is located above and in front of the player facing the same. The ultrasonic transmitter 17 and the ultrasonic receivers 13, 15 are positioned on a single straight line with the ultrasonic transmitter 17 located in the exact middle between the ultrasonic receivers 13, 15. The game machine 10 measures a period of time elapsed after the ultrasonic transmitter 17 transmits ultrasonic wave downwards and before the ultrasonic receivers 13, 15 receive the reflected wave. With the above, two distances, namely the distance combining the distance from the ultrasonic transmitter 17 to the player's head and the distance from the player's head to the ultrasonic receiver 13, and the distance combining the distance from the ultrasonic transmitter 17 to the player's head and the distance from the player's head to the ultrasonic receiver 15, are obtained, and the posture of the player standing on the game stage 20 is determined based on the two distances.

A monitor 24 for showing a game screen image is mounted on the enclosure 12 in front of the player's eyes, and an advertising panel 22 is attached above the monitor 24. The portion below the monitor 24 projects forward forming a projected portion 26. A speaker 28 for outputting game sound effects and game music is mounted on the foremost surface of the projected portion 26. The upper end of the front plate 38, or a vertically long bent plate which is narrower in width than the enclosure, is mounted on the portion below the monitor 24. The lower end of the front plate 38 is attached to the top surface of the pedestal 18 such that the front plate 38 stands upright on the top surface. Specifically, the front plate 38 stands upward substantially vertically from the pedestal 18 and then bends towards the enclosure 12 with the upper end thereof attached to the portion below the monitor 24, as described above.

Selection buttons 34, 36 and a determination button 32 are formed on the front surface of the front plate 38, so that the player can carry out various select operations by pressing these buttons. Also, a gun holder is formed below the selection buttons 34, 36 and the determination button 32, where the gun controller 30 can be hooked when not used.

The one ends of the signal cable 48 and the holding cable 42 are attached to the grip of the gun controller 30. A pointing direction switching button 30a for switching the content shown on the monitor 24 is formed on the side surface of the barrel of the gun controller 30. The other end of the signal cable 48 is led to the inside of the enclosure 12 so that a detected result (used in detection of the barrel direction) by the optical sensor incorporated into the barrel of the gun controller 30, a trigger signal indicating the trigger pulled, and a viewing direction switching signal indicating the pointing direction switching button 30a pressed are notified via the signal cable 48 to the inside of the enclosure 12. The other end of the holding cable 42 is rigidly attached to the lower portion of the enclosure 12 so as to prevent the gun controller 30 from being readily taken away.

A coin inserting slot 40 and a returned coin receiver 44 are formed on the lower portion of the enclosure 12, and a coin collection door 46 for collecting the coins inserted via the coin inserting slot 40 and accumulated in a coin box (not shown) inside the enclosure 12 is formed on the further lower portion of the enclosure 12.

With the thus constructed game machine 10, the player stands on the game stage 20 with their feet on the footprint 52, then holds the gun controller 30, directs the barrel of the gun controller 39 to the opponent shown on the monitor 24, and pulls the trigger. Accordingly, a bullet object is fired in the virtual three dimensional space, flying towards the opponent. Similarly, the opponent fires a bullet object back to the player. The player can avoid the bullet object by moving their head left or right or bending their body to lower their head.

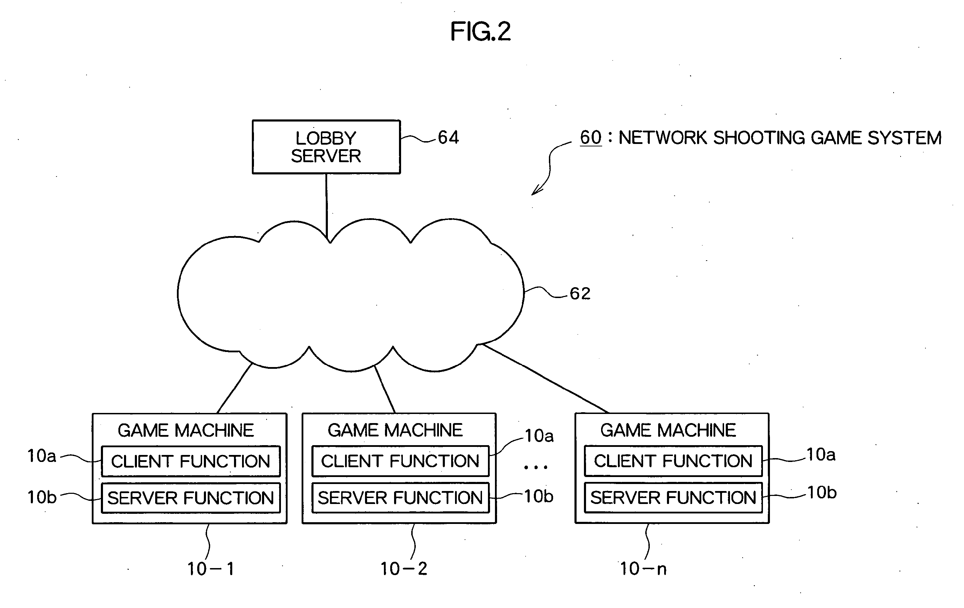

As shown in Fig. 2, the game machine 10 is connected to a communication network, constituting, together with other game machines 10, a network shooting game system. That is, as shown in Fig. 2, in the network shooting game system 60, a plurality of game machines 10 (the n number of game machines 10-1 to 10-n here), as well as a lobby server 64, are connected to a communication network 62, such as the Internet or the like. Each game machine 10 has a server function 10b in addition to a client function 10a, and the lobby server 64 selects a plurality of game machines 10 which participate in a network shooting game from among those which currently access the lobby server 64. For example, the lobby server 64 acquires information about the game training level of the player of each game machine 10, then selects a plurality of game machines 10 played by players at similar game training levels, and causes the selected game machines 10 to participate in the same network shooting game. The lobby server 64 additionally selects one of the thus selected game machines 10 as a game server. The client function 10a of the game machine 10 serving as a game server and that of the other game machine 10 receive data about the current situation in the virtual three dimensional space, or the like, via the server function 10b of the game machine 10 serving as a game server, whereby the respective game machines 10 share the virtual three dimensional space where the shooting game takes place.

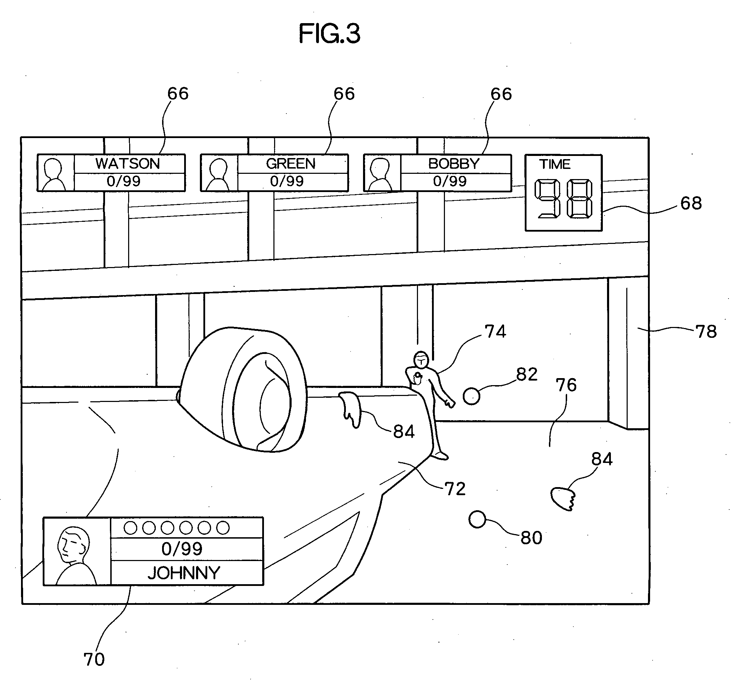

Fig. 3 shows one example of a game screen image shown on the monitor 24 of each game machine 10. In this network shooting game system 60, a player character object is associated with a game machine 10, and all of the player character objects associated with the respective game machines 10 participating in the game are placed in the virtual three dimensional space. In the game machine 10, a picture obtained by viewing the virtual three dimensional space from a viewpoint set in the position of the eyes of the player character object associated with the game machine 10 is shown as a game screen image on the monitor 24. Besides, a self status image 70 indicative of the state of the player themselves and an others status image 66 indicative of the state of another participant are shown on the game screen. In addition, an elapsed time image 68 indicative of a period of time elapsed after the game begins is shown.

As shown in Fig. 3, a moving object (an object which changes position and posture thereof as time passes), such as a player character object (a viewpoint setting object) 74 and bullet objects (moving object) 80, 82, is placed in the three dimensional space in addition to a static object (an object which does not change position and posture thereof as time passes), such as an automobile object 72; a building object.78, and a ground surface object 76. On the game screen shown in Fig. 3, a picture obtained by viewing the virtual three dimensional space from the viewpoint set in the position of the eyes of a player character object is displayed, in which a player character object 74 associated with another game machine 10 is displayed at the substantial center of the game screen, and a bullet object 80 representative of a paint ball (a small resin ball containing paint inside) fired by the toy gun held by the player character object 74 is displayed as if located closer to the player of that game machine 10. In addition, a bullet object 82 fired by the player character object (not shown) associated with the game machine 10 showing that game screen image is displayed around the player character object 74.

In this embodiment, the bullet objects 80, 82 are simulation of a paint ball. When the bullet object 80, 82 hits an object, such as the automobile object 72, the building object 78, the ground surface object 76, the player character object 74, or the like, for example, an image of the bullet object 80, 82 exploded with the paint inside attached to the object is displayed. Here, paint mark objects 84 are placed on the ground surface object 76 and the automobile object 72, representing the bullet objects having hit the objects. In particular, in this embodiment, the direction in which the bullet object hits against such an object (a contact direction) is calculated, and a texture image in accordance with the angle formed by this direction and the direction of the contact surface (horizontal or normal direction) is used in displaying the paint mark object 84. For example, as the angle formed by the contact direction and the horizontal direction of the contact surface reaches closer to 90 degree, the paint mark object 84 of a texture image representative of a paint mark closer to being round is displayed, and as the angle formed by the contact direction and the horizontal direction of the contact surface reaches closer to zero, the paint mark object 84 of a texture image representative of an elongated paint mark extending in the horizontal direction is displayed. In the above, the direction in which the paint mark is elongated, that is, the direction in which the paint mark object 84 is placed, coincides with the contact direction of the bullet object. With the above, the player looking at the paint mark object 84 shown on the game screen can immediately know from where in the virtual three dimensional space the bullet object which causes the paint mark object 84 comes.

In the following, internal processing by each game machine 10 will be described in detail.

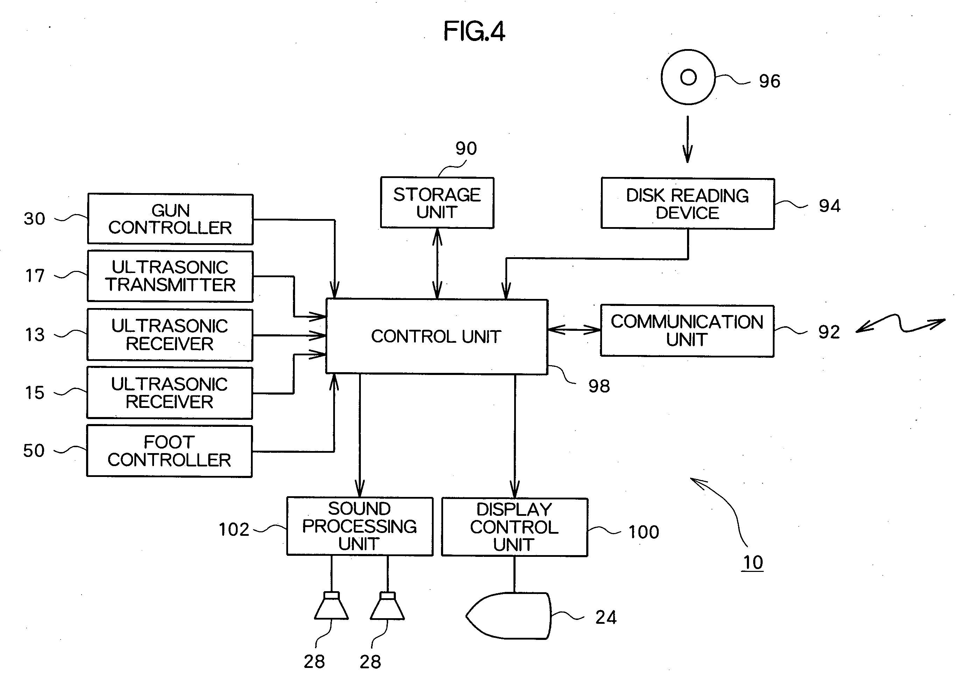

Fig. 4 is a diagram showing a hardware structure of the game machine 10. As shown in Fig. 4, the game machine 10 is a computer game system and is constructed using a control unit 98, formed by a CPU, a memory, and so forth, as a main element. The control unit 98 is connected to a gun controller 30, a ultrasonic transmitter 17, ultrasonic receivers 13, 15, a foot controller 50, a storage unit 90, a disk reading device 94, a communication unit 92, a sound processing unit 102, and a display control unit 100.

The gun controller 30 is a gun-shaped game controller and receives, via the controller unit 98, information about a time at which the player pulls the trigger, a pointing direction of the gun controller 30 at that time (specifically, to which part in the monitor 24 the barrel of the gun controller 30 is directed), and a pointing direction switching signal indicative of the pointing direction switching button 30a pressed. The ultrasonic transmitter 17 transmits an ultrasonic wave in response to an instruction from the control unit 98. The control unit 98 begins time measurement at the moment at which the ultrasonic transmitter 17 is instructed to transmit a ultrasonic wave. The ultrasonic receivers 13, 15 receive the ultrasonic wave transmitted from the ultrasonic transmitter 17 and forward the received waveform thereof to the control unit 98. The control unit 98 determines the time at which the ultrasonic receivers 13, 15 receive the wave having been reflected by the player's head, based on the received waveform. The foot controller 50 notifies the control unit 98 of the fact that the player steps on the foot controller 50.

The storage unit 90 comprises various data storage means, such as a hard disk memory device, a RAM, and so forth, and stores a program to realize the client function 10a and the server function 10b.

The disk reading device 94 reads data from a disk 96, or a computer readable information storage medium, such as a CD-ROM, a DVD-ROM, or the like, and supplies the read data to the control unit 98. It is determined here that various programs to be executed in the game machine 10 are supplied from the disk 96 to the game machine 10 and then installed in the storage unit 90.

The communication unit 92, connected to the communication network 62, receives data about the state of another game machine 10 participating in the network shooting game (position data and trajectory data to be described later) from the game machine 10 operating as a game server, and sends data about the state of the own machine (the game machine 10) to the game machine 10 operating as a game server (position data and trajectory data to be described later). The game machine 10 operating as a server receives data from the client function 10a of another game machine 10 and distributes the received data to the client function 10a of still another game machine 10.

The sound processing unit 102 is connected to the speakers 28, 28, and outputs game sound effects, game music, and other sounds under the control the control unit 98. For example, a bullet firing sound is output when firing a bullet object. The display control unit 100 is connected to the monitor 24 and displays a game screen image, such as is shown in Fig. 3, for example, under control of the control unit 98.

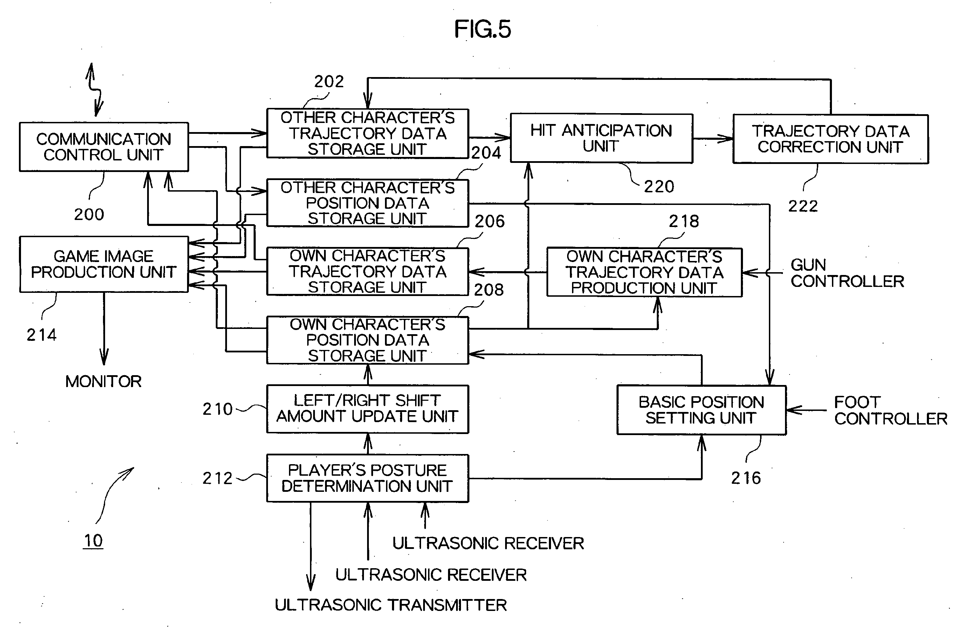

Fig. 5 is a functional block diagram of the game machine 10. The game machine 10 is a computer game system having a publicly known structure, as described above, and executing a predetermined program to thereby realize various functions. As shown in Fig. 5, the game machine 10 comprises, in terms of functions, a communication control unit 200, another character' s trajectory data storage unit 202, another character's position data storage unit 204, an own character's trajectory data storage unit 206, an own character's position data storage unit 208, a left/right shift amount update unit 210, a player' s posture determination unit 212, a basic position setting unit 216, an own character's trajectory data production unit 218, a hit anticipation unit 220, a trajectory data correction unit 222, and a game image production unit 214. These functions are realized by the control unit 98 by executing a program supplied from the disk 96 to the game machine 10.

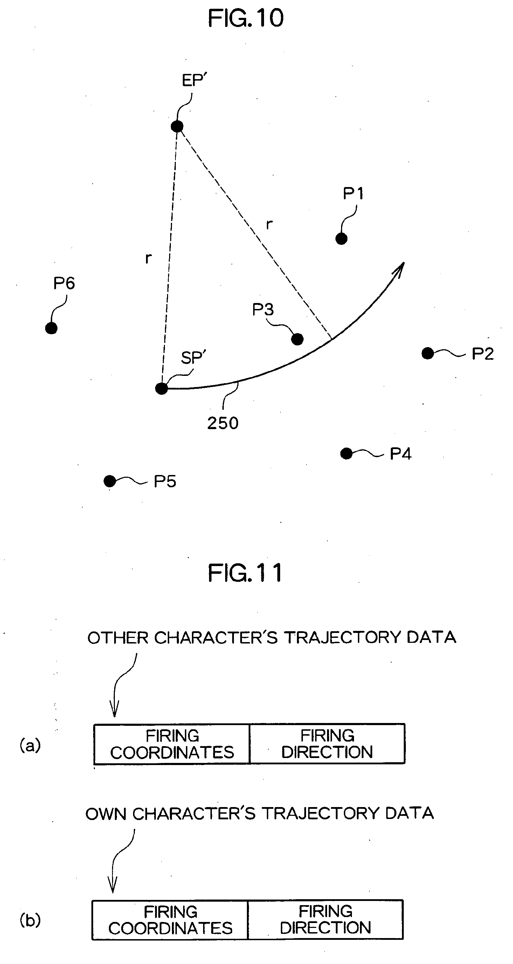

Initially, the own character's trajectory data production unit 218 produces trajectory data based on an input from the gun controller 30. That is, with data indicative of the barrel direction input from the gun controller 30, the position coordinates of the own character at the time (the absolute coordinates in the virtual three dimensional space) are produced based on the content stored in the own character's position data storage unit 208. The produced position coordinates, regarded as a bullet object firing position, and the barrel direction (a firing direction) input from the gun controller 30 are stored as trajectory data in the own character's trajectory data storage unit 206. Fig. 11 (b) shows a structure of data stored in the own character's trajectory data storage unit 206. The trajectory data stored in the own character's trajectory data storage unit 206 is sent by the communication control unit 200 to the game machine 10 executing the server function 10b, which in turn distributes the received trajectory data to another game machine 10 participating in the network shooting game. The communication control unit 200 of each game machine 10 receives the data, which in turn is stored in the other character' s trajectory data storage unit 202. Fig. 11 (a) shows a structure of data stored in the other character's trajectory data storage unit 202.

With the trajectory data produced by another game machine 10 stored in the other character's trajectory data storage unit 202, the hit anticipation unit 220 anticipates whether or not the bullet object will hit an player character object that has been aimed at, based on the trajectory data stored in the other character's trajectory data storage unit 202 and the position coordinates (the absolute coordinates) of the player character object associated with the game machine 10, calculated based on the content stored in the own character's position data storage unit 208. That is, whether or not the anticipated trajectory of the bullet object, indicated by the trajectory data, will enter an area (not shown) for hit-check (interference determination), which is set on the targeted player character object, is determined. The trajectory of the bullet object may be a straight line or a parabola, with various other trajectories also available.

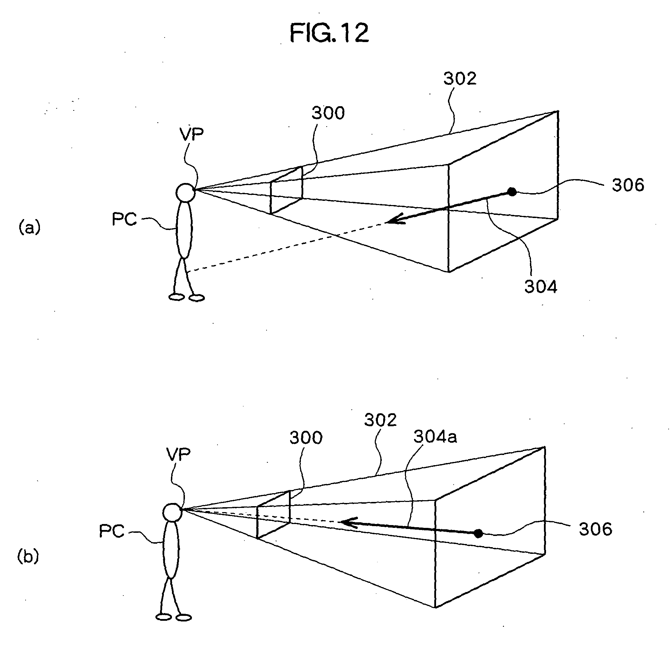

When the bullet object enters the hit-check area, that is, when the bullet object 306 is anticipated to hit the predetermined point set on the player character PC (see Fig. 12 (a)), the trajectory data correction unit 222 corrects the trajectory data stored in the other character's trajectory data storage unit 202 based on the position coordinates of the viewpoint VP set at the position of the eyes of the player character object PC associated with the game machine 10 (see Fig. 12 (b)). Specifically, the trajectory data correction unit 222 changes the firing direction 304 in the trajectory data so as to be directed to the viewpoint VP set at the position of the eyes of the player character PC, and thereby obtain a corrected firing direction 304a. That is, the trajectory data correction unit 222 corrects the firing direction 304 (vector data) which constitutes the trajectory data, such that a smaller angle is formed by the vector connecting the firing position of the bullet object 306 and the viewpoint VP and the vector of the firing direction 304 of the bullet object 306. Then, the corrected data is stored in the other character' s trajectory data storage unit 202. With the above, the bullet object 306 resultantly moves in the view field range 302 of the player character PC. That is, when a game screen image is produced by projecting the picture showing the situation in the virtual three dimensional space onto the screen 300, the bullet object 306 is reliably displayed on the formed game screen.

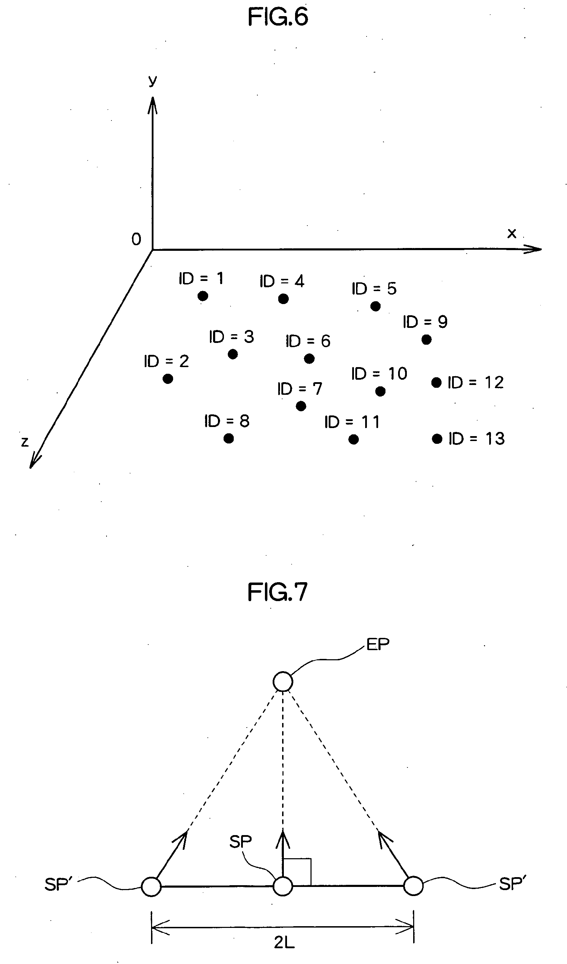

In the game machine 10, a plurality of base positions are defined in the virtual three dimensional space, which serves as a stage of the game, as shown in Fig. 6, and the position coordinates and ID's of the positions are stored in advance. The actual position of each game character object is determined using a base position as a reference (a placement reference position). The basic position setting unit 216 selects as a placement reference position the base position of the player character object associated with the game machine 10. Specifically, at the start of the game, a predetermined base position is selected as a placement reference position. Then, when the player's posture determination unit 212 determines that a period of time longer than a predetermined period of time has elapsed with the player remaining in a posture largely displaced left or right on the game stage 20, a base position which is present in the direction corresponding to the direction in which the player moves their body in the virtual three dimensional space is newly defined as a placement reference position. Alternatively, with the foot controller 50 stepped on, a base position ahead of the player character object may be newly defined as a placement reference position.

The basic position setting unit 216 selects an opponent player character to whom the player character object associated with the game machine 10 faces, from among the other player character objects placed in the virtual three dimensional space, and manages the base position associated with that player character object as a pointing position. Specifically, the other character's position data storage unit 204 stores base positions (a placement reference position) selected in other game machines 10, and one of those positions stored is selected as a pointing position. Every time the pointing direction switching button 30a of the gun controller 30 is pressed and a pointing direction switching signal is input, the base position selected as a pointing position is switched to other base position. In the above, a base position close to the current placement reference position, or a reference position which meets a condition such as being a placement reference position of the player character object attacking the player character object associated with the game machine 10, or the like, is selected with priority. This arrangement makes it possible, by pressing the pointing direction switching button 30a a reduced number of times, to change the posture of the player character object so as to face an opponent which the player character object needs to attack most urgently. The result of selection by the basic position setting unit 216 (the placement reference position and the pointing position of the player character object associated with the game machine 10) is stored in the own character's position data storage unit 208.

Fig. 10 is a diagram explaining a method for re-selecting a placement reference position. As shown in Fig. 10, with the base positions P1 to P6 defined in the virtual three dimensional space, an trajectory 250 (direction data) which centers the position of the opponent player character object (opponent object) placed in the pointing position and passing through the current position SP' of the player character object is calculated. The trajectory 250 runs counter-clockwise on a flat surface when the player's face moves left facing the enclosure 12. When the player's head moves right facing the enclosure 12, the trajectory 250 runs clockwise on a flat surface. Then, the base position (P3 here) closest to the trajectory 250 is selected as a new placement reference position.

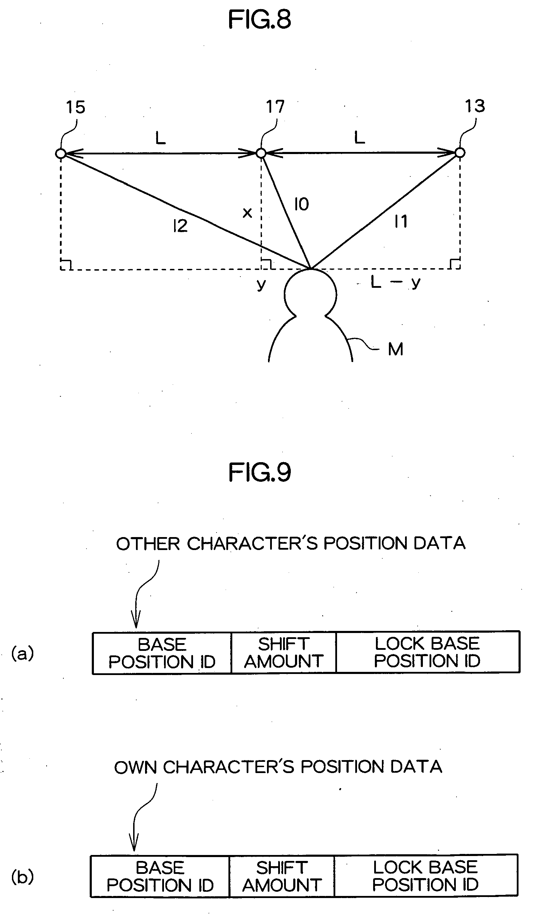

The player's posture determination unit 212 determines the posture of the player standing on the game stage 20, using the ultrasonic transmitter 17 and the ultrasonic receivers 13, 15. That is, as shown in Fig. 8, periods of time elapsed after the ultrasonic transmitter 17 transmits a ultrasonic wave and before the reflected ultrasonic wave from the head of the player M is incident into the respective ultrasonic receivers 13, 15 are measured, and the sum of the distance 10 from the ultrasonic transmitter 17 to the head of the player M and the distance 11 from the head of the player M to the ultrasonic receiver 13, or (10+11), and the sum of the distance 10 from the ultrasonic transmitter 17 to the head of the player M and the distance 12 from the head of the player M to the ultrasonic receiver 15, or (10+12), are obtained based on the measured periods of time. As the length L in the drawing is known, the data (x and y) specifying the position of the head of the player M can be calculated based on such information. Then, when the absolute value of the value y (the amount by which the player's head shifts in the right-left direction relative to the position of the ultrasonic transmitter 17, or the reference position) remains equal to or larger than the predetermined value for more than a predetermined period of time, the displaced direction of the player's head is informed to the basic position setting unit 216, which, in response, re-selects the placement reference position.

Meanwhile, when the absolute value of the value y does not remain equal to or larger than the predetermined value for more than a predetermined period of time, the player's posture determination unit 212 informs the left/right shift amount update unit 210 of the value of y. The left/right shift amount update unit 210 in turn calculates the shift amount of the player character object based on the value of y and stores the shift amount in the own character's position data storage unit 208. The shift amount may be, for example, the value of y itself informed by the player's posture determination unit 212 or may be calculated by executing various processing, such as smoothing, or the like, with respect to the sequentially produced values of y.

Fig. 9 (b) shows a structure of data stored in the own character' s position data storage unit 208. As shown in Fig. 9 (b), the position data contains a base position ID identifying the base position selected by the basic position setting unit 216 as a placement reference position, a shift amount set by the left/right shift amount update unit 210, and a base position ID (a lock base position ID) identifying the base position selected by the basic position setting unit 216 as a pointing position.

Fig. 7 indicates the relationship among the shift amount, the placement reference position, the current position of the player character. In Fig. 7, the thick line arrow represents the posture of the player character object, SP represents a placement reference position, SP' represents the position of the player character object having been shifted by a maximum distance, and EP represents the base position selected as a pointing position. The player character object moves left or right, while pointing to the pointing position EP, by the shift amount set by the left/right shift amount update unit 210 with the placement reference position SP as a center. It should be noted that, although the shift direction of the player character is determined in the above as perpendicular to the direction extending from the placement reference position SP to the pointing position EP, the player character object may be shifted in another direction. The shift amount is limited to a constant distance in each of the left and right directions (L for both here).

The communication control unit 200 sends the data stored in the own character's position data storage unit 208 to the game machine 10 executing the server function 10b, which in turn distributes the received data to another game machine 10 participating in the network game. The communication control unit 200 receives the position data thus distributed and stores the position data in other character's position data storage unit 204. Fig. 9 (a) shows a structure of data stored in the other character's position data storage unit 204.

The game image production unit 214 renders a game screen image to be displayed on the monitor 24 based on the contents stored in the other character's trajectory data storage unit 202, the other character's position data storage unit 204, the own character's trajectory data storage unit 206, and the own character's position data storage unit 208. Specifically, trajectory data is read from the other character's trajectory data storage unit 202, and a bullet object is placed on the trajectory indicated by the trajectory data in the virtual three dimensional space and moved as time passes. Similarly, trajectory data is read from the own character's trajectory data storage unit 206, and a bullet object is placed on the trajectory indicated by the trajectory data in the virtual three dimensional space and moved as time passes.

Further, position data is read from the other character's position data storage unit 204, and the player character object associated with another game machine 10 is placed in the position indicated by the position data in the virtual three dimensional space. In the above, the posture of the player character object is determined so as to be directed from the current position to the pointing position, based on the pointing position (the lock base position ID). The player character object is placed in the position shifted by a shift amount from the placement reference position. Similarly, position data is read from the own character' s position data storage unit 208, and the player character object associated with the game machine 10 is placed in the position indicated by the position data in the virtual three dimensional space. In the above also, the posture of the player character object is determined based on the pointing position (the lock base position ID) so as to be directed from the current position to the pointing position. Also, the player character object is placed in a position shifted by a shift amount from the placement reference position. When the placement reference position of the player character object associated with the game machine 10 is switched or when the placement reference position of the player character object associated with another game machine 10 is switched, the positions of the respective player character objects in the virtual three dimensional space are moved so as to be directed to the newly set placement reference position. Then, a game screen image showing the player character object moving in the virtual three dimensional space is produced and output to the monitor 24.

It should be noted that although it is described in the above that the player character object moves forward when the foot controller 50 is stepped on, and that an trajectory 250 extending like an arc in the left or right direction of the player character object is calculated as direction data when the player's head position remains shifted left or right by a distance equal to or larger than a predetermined distance relative to the reference position for more than a predetermined period of time, so that the placement reference position is switched according to the direction data and the player character object is moved toward the newly set placement reference position, it may alternatively be arranged such that direction data concerning the direction in accordance with the shift amount of the player's head position relative to the reference position (the position of the ultrasonic transmitter 17) in the right-left direction is calculated, so that when the foot controller 50 is stepped on, a reference position which is present in the direction indicated by the direction data is newly defined as a placement reference position and the player character object is moved toward the newly defined placement reference position.

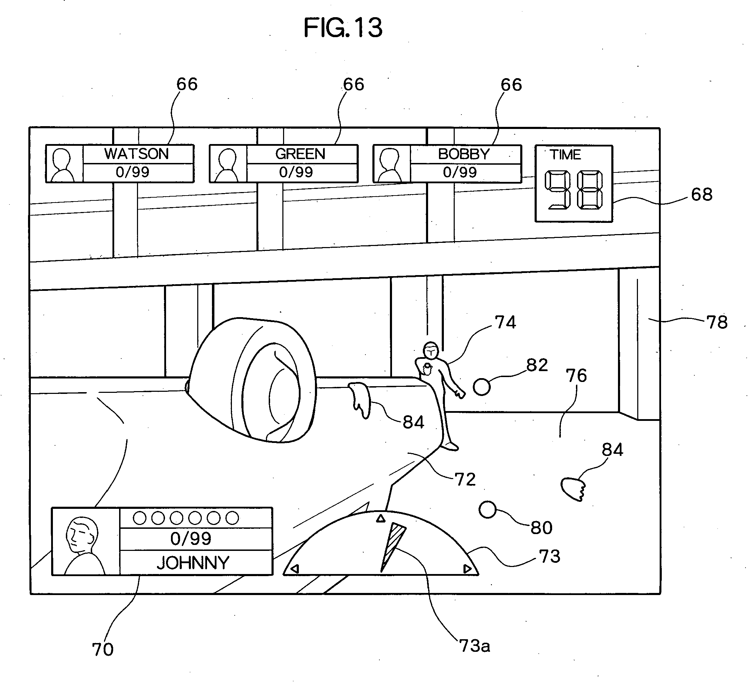

Fig. 13 shows one example of a game screen image in this case. The shown example of the game screen image differs from the example of the game screen image shown in Fig. 3 in that a substantially semicircular moving direction indicator image 73 is shown in the lower part on the screen with the arc portion thereof directed upward. The moving direction indicator image 73 contains a moving direction identifying image 73a indicating the moving direction of the player character object associated with the game machine 10 showing the moving direction indicator image 73. The moving direction identifying image 73a is an elongated image (a long isosceles triangle here) with one end thereof fixed at the center of the lower side of the moving direction indicator image 73 and placed on the moving direction indicator image 73 so as to extend forming an angle in accordance with the shift amount of the player's head position. This angle indicates the direction of the direction data for use in calculation of a new placement reference position of the player character object.

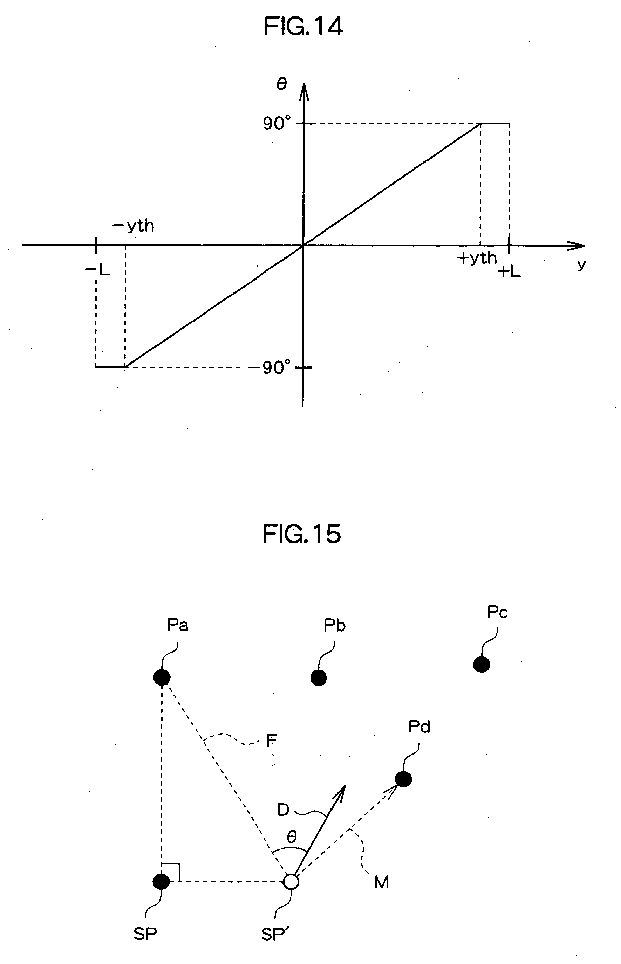

Fig. 14 indicates the relationship between the shift amount y of the player's head position in the right-left direction relative to the reference position and the direction θ indicated by the direction data. As shown in Fig. 14, as the shift amount y increases, the direction θ also increases monotonically, and as the shift amount y decreases, the direction θ also decreases monotonically. When the shift amount y reaches equal to or larger than yth, the direction θ remains at +90°, and when the shift amount y reaches equal to or smaller than -yth, the direction θ remains at -90°. The basic position setting unit 216 (see Fig. 5) receives the shift amount y from the player's posture determination unit 212, and according to the relationship indicated in Fig. 14, calculates direction data indicating the direction θ based on the shift amount. The game image production unit 214 obtains the thus calculated direction data and produces a game screen image in which the moving direction identifying image 73a placed on the moving direction indicator image 73 and extending in the direction θ indicated by the obtained direction data is shown in the lower portion of the game screen image, as shown in Fig. 13. The game screen image is displayed on the monitor 24.

The direction data calculated by the basic position setting unit 216 is used also in calculation by the basic position setting unit 216 for re-determination of the placement reference position when the foot controller 50 is stepped on. Fig. 15 is a diagram illustrating a method for re-determining a placement reference position of a player character object. In Fig. 15, Pa to Pd indicate base positions; SP indicates the base position selected as a placement reference position of the current player character object; and SP' indicates the current position of the player character object. The player character object is placed in the current position SP', or a position shifted from the placement reference position SP according to the player's head position, so as to be directed to the lock base position Pa. When the shift amount y of the player's head position relative to the reference position is calculated and direction data indicative of the direction θ according to the shift amount y is calculated, as described above, with the foot controller 50 stepped on, a new placement reference position is selected from among the base positions yet to be selected as a placement reference position of the player character object position, using as a reference the drawing direction of the direction D displaced by the direction θ from the front direction F of the player character object. In the above, a base position closer to the direction D, a base position closer to the current position SP' of the player character object, a base position enabling the player character object to be hidden from the opponent player character object due to the presence of an obstacle object on the way to the lock base position Pa, and so forth are selected with priority. With a new placement reference position (the base position Pd here) selected as described above, the player character object moves in the direction M. The basic position setting unit 216, having selected a base position to serve as a new disposition base position in response to the foot controller 50 being stepped on, stores the ID of the base position in the own character's position data storage unit 208. The ID of the base position is sent to another game machine 10. Then, the game image production unit 214 of each game machine 10 moves the player character object of which base position serving as a placement reference position is changed from the current position towards the newly selected placement reference position in the virtual three dimensional space and produces a game screen image showing the player character object moving.

With the above, the player can move the player character object 50 in their desired direction by stepping on the foot controller 50, while checking the direction indicated by the moving direction identifying image 73a on the moving direction indicator image 73 by moving their head right or left, at a moment at which the moving direction identifying image 73a on the moving direction indicator image 73 has moved to point at their desired direction. In the above, the player need not use their hands, and can thus concentrate on the operation of to the gun controller 30.

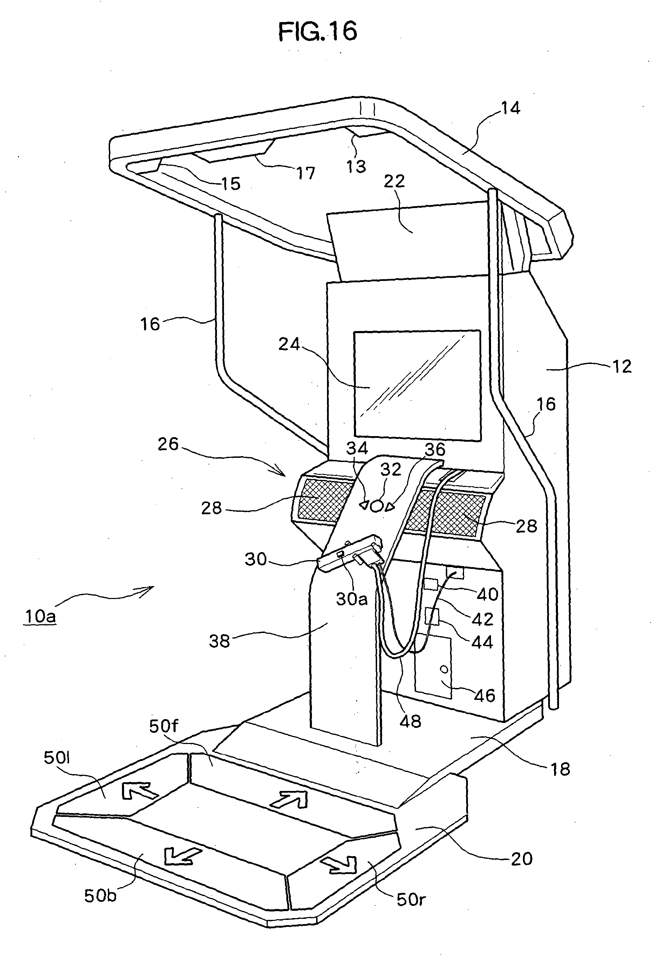

Here, it should be noted that although only a single foot controller 50 is provided for operation by the player's feet in the above, two or more foot controllers may be provided to the game stage 20 so that the player character object can be moved in a direction in the virtual space corresponding to the foot controller stepped on by the player. Fig. 16 is a perspective view showing an external appearance of a game machine according to a modified example. The game machine 10a shown in Fig. 16 differs from the game machine 10 shown in Fig. 1 in that four foot panels, that is, a front foot panel 50f, a right foot panel 50r, a left foot panel 501, and a back foot panel 50b are provided to the game stage 20.

With the player standing at the center of the game stage 20, the front foot panel 50f is resultantly located ahead of the player (on the enclosure 12 side) and the right foot panel 50r is located at the right of the player. The left foot panel 501 is located at the left of the player and the back foot panel 50b is located behind the player. With the front foot panel 50f stepped on, the player character object is moved forward in the virtual space, and the base position located ahead of the player character object in the virtual space is newly defined as a placement reference position thereof. Similarly, with the right foot panel 50r stepped on, the player character object is moved right in the virtual space, and the base position at the right of the player character object in the virtual space is newly determined as a placement reference position thereof. With the left foot panel 501 stepped on, the player character object is moved left in the virtual space, and the base position at the left of the player character object in the virtual space is newly determined as a placement reference position thereof. Similarly, with the back foot panel 50b stepped on, the player character object is moved back in the virtual space, and the base position behind the character player object in the virtual space is determined as the placement reference position thereof.

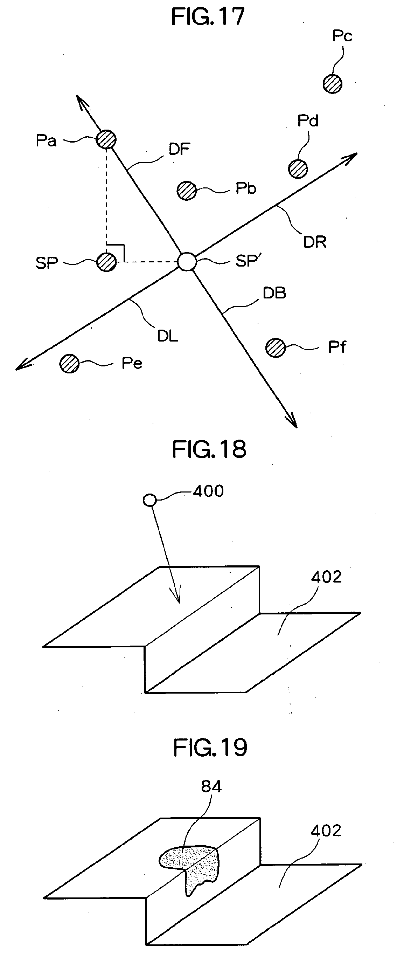

Fig. 17 is a diagram illustrating a specific method for re-determining the placement reference position of the player character object 50. In Fig. 17, Pa to Pf indicate base positions; SP indicates the base position selected as a placement reference position of the current player character object; and SP' indicates the current position of the player character object. The player character object is placed in the current position SP', or a position shifted from the placement reference position SP according to the player's head position, so as to be directed to the lock base position Pa.

In this modified example, with the front foot panel 50f stepped on in the above-described situation, a base position is selected from among those placed in the direction DF extending from the current position SP' toward the lock base position Pa, and defined as a new placement reference position. For example, a base position is selected from among those placed in a fan-like area spreading at a predetermined angle (for example, 178 degrees) with the direction DF running in the middle thereof in consideration of the distance to the current position SP', whether or not the player character object can be hidden form the current opponent player character object due to the presence of an obstacle object placed on the way to the lock base position Pa, and so forth, and defined as a new placement reference position.

Similarly, with the right foot panel 50r stepped on, a base position to serve as a new reference position is selected from among those placed in the direction DR, or a direction displaced right by 90 degrees relative to the direction DF extending from the current position SP' toward the lock base position Pa. Also, with the left foot panel 501 stepped on, a base position to serve as a new reference position is selected from among those placed in the direction DL, or a direction displaced left by 90 degrees relative to the direction DF extending from the current position SP' toward the lock base position Pa. Further, with the back foot panel 50b stepped on, a base position to serve as a new reference position is selected from among those placed in the direction DB extending opposite from the direction DF extending from the current position SP' toward the lock base position Pa. The selection reference used in the above is identical to that which is used in a case with the front foot panel 50f stepped on.

With the above-described arrangement, it is possible, by stepping on any of the foot panels 50f, 50r, 501, 50b, to immediately move the player character object in the direction according to the foot panel that is stepped on. This allows more intuitive operation. It should be noted that instead of the above-described moving method, it may be arranged such that with the front foot panel 50f in particular stepped on, direction data about a direction according to the shift amount of the player's head position relative to the reference position in the right-left direction is calculated, so that a reference position in the direction indicated by the direction data is selected as a new placement reference position and the player character object is moved towards the newly defined placement reference position. With the above, in moving the player character object ahead in particular, the moving direction of the player character object can be finely adjusted according to the player's head position.

In the following, display of a mark made by a paint ball in the game machine 10 will be described. Specifically, in this game machine 10, whether or not a bullet object contacts another object is initially determined. When the bullet object has ever contacted other object; trajectory data related to the bullet object is deleted from the other character's trajectory data storage unit 202 or the own character's trajectory data 206, and an image representative of a paint mart is displayed at the contact position. With the above, a paint mark object is placed at a position where the bullet object contacts (or hits) other object in the virtual three dimensional space.

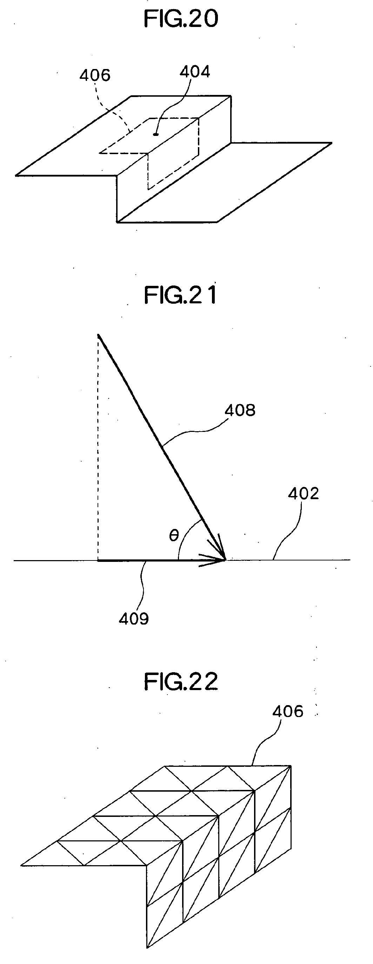

As a method for displaying a paint mark object, two methods described below are adopted. For a static object, such as a building object 78 and so forth, when the bullet object 400 contacts a static object 402, as shown in Fig. 18,a paint mark object 84 elongated in the contact direction (clash direction) towards the static object 402 is displayed, instead of the bullet object 400, as shown in Fig. 19. That is, the paint mark object 84 is placed at a position where the bullet object 400 contacts the static object 402 (the position of clash). Specifically, in image processing, a portion of the static object 402 around the contact position 404 is cut off, as shown in Fig. 20. In the above, the contact direction 408 is calculated based on the trajectory of the bullet object 400 and projected onto the static object 402 to thereby obtain a vector 409, and an angle θ formed by the vector 409 and the contact direction 408 is calculated, as shown in Fig. 21.

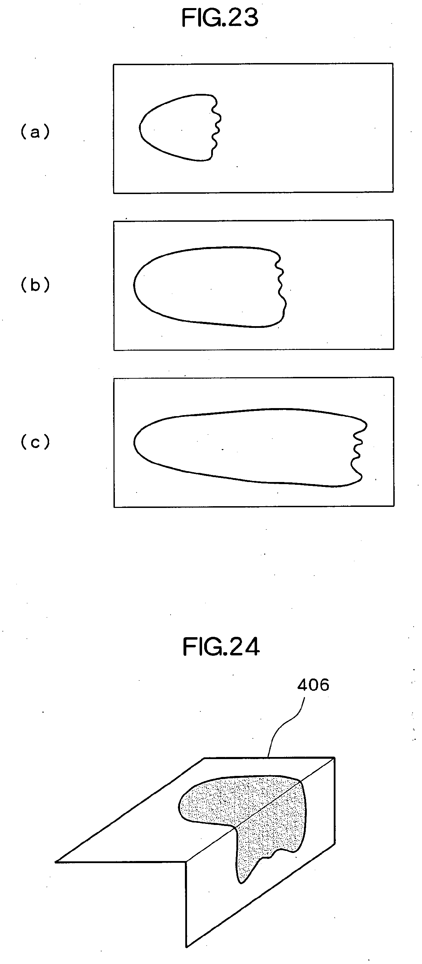

In cutting off the portion of the static object 402 around the contact position 404, the direction of the portion cut off is determined according to the vector 409. Then, the polygon forming the cut off paint mark object 406 is divided into smaller pieces (see Fig. 22), onto which a texture image representative of a paint mark is mapped. In the above, a plurality of texture images each representative of the paint mark are prepared in advance and stored in association with the respective concerned ranges of the angle θ (see Fig. 23), so that a texture image according to the thus calculated angle e is selectively read and mapped onto the paint mark object 406 (see Fig. 24). Thereafter, the paint mark object 406 is placed on the contact position of the bullet object 400 in the original static object 402.

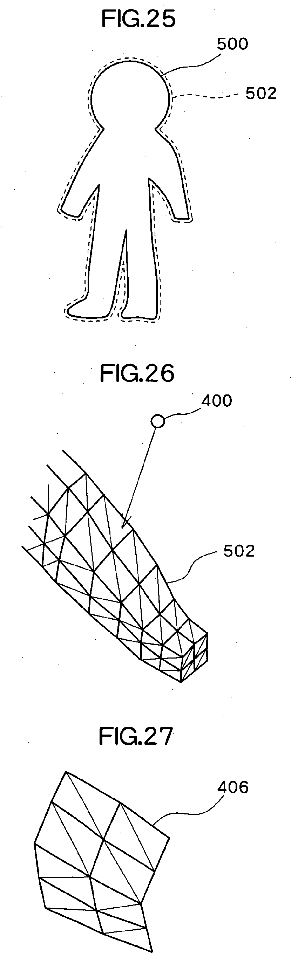

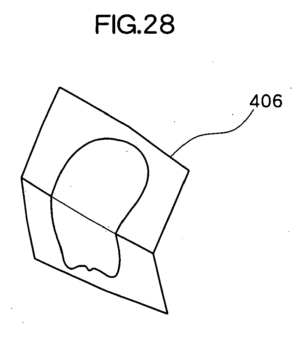

Meanwhile, for a moving object, such as a player character object and so forth, an invisible polygon model (a paint mark object) 502 is placed around the moving object 500, which is large enough to fully encompass the moving object, as shown in Fig. 25. The polygon model 502 is formed by combining finer polygons than the moving object 500 itself, which enables mapping of any texture onto any point, as shown in Fig. 26. Then, when the bullet object 400 comes into contact with the moving object 500, the position of the polygon model 502 according to the contact position is specified (see Fig. 27), and the paint mark texture image prepared in advance, as shown in Fig. 23, is mapped onto the specified position (see Fig. 28) . In the above, a texture image in accordance with the angle formed by the contact direction of the bullet object 400 relative to the moving object 500 and the direction of the contact surface is selectively read and mapped onto the contact position.

Thereafter, the game image production unit 214 produces an image showing a picture obtained by viewing the virtual three dimensional space from a viewpoint defined in the position of the eyes of the player character object associated with the game machine 10 and displays the image on the monitor 24.

According to the above-described network game system, when it is anticipated that the bullet object will come into contact with the player character object, the trajectory of the bullet object is corrected such that the bullet object moves toward the viewpoint set on the player character. This arrangement makes it possible to display the bullet flying, by displaying an image representative of a picture obtained by viewing the virtual three dimensional space from the viewpoint.

The arrangement in which the positions of the respective player character objects are restricted to any of the plurality of predetermined base positions and the postures thereof are calculated based on the base positions to which other player character obj ects are restricted makes it possible for the plurality of game machines 10 to share the positions and postures of the objects associated with the respective game machines 10 by the plurality of game machines while suppressing an increase in traffic in the communication network 62.

Further, the arrangement in which a paint mark object having a texture image mapped thereon in accordance with the contact direction and the direction of the contact surface is displayed when a bullet object contacts other object makes it possible for the player to instantly recognize, by looking at the game screen, from where the bullet object came.

## Claims

1. A network game system containing a plurality of game machines connected to a communication network, which share a virtual space where a plurality of objects associated with any of the plurality of game machines are placed and a plurality of base positions are defined, wherein,
each of the game machines comprises
first base position selection means for selecting one of the plurality of base positions;
first base position transmission means for transmitting the base position selected by the first base position selection means to another game machine;
first base position receiving means for receiving the base position transmitted by the first base position transmission means from another game machine;
second base position selection means for selecting one of the base positions received by the first base position receiving means;
own object position determination means for determining a position of an object associated with the game machine based on the base position selected by the first base position selection means; and
own object posture determination means for determining posture of the object associated with the game machine based on the base position selected by the second base position selection means.

2. The network game system according to claim 1, wherein
each of the game machines further comprises:
second base position transmission means for transmitting the base position selected by the second base position selection means to another game machine;
other object position determination means for determining a position of an object associated with the other game machine based on the base position received by the first base position receiving means from the other game machine; and
other object posture determination means for determining posture of the object associated with the other game machine based on the base position transmitted by the second base position transmission means from the other game machine.

3. The network game system according to claim 1 or 2, wherein
each of the game machines further comprises
shift amount input means for inputting a shift amount of the object associated with the game machine, and
shift amount transmission means for transmitting the shift amount input by the shift amount input means to another game machine, and
the own object position determination means determines a position of the object associated with the game machine based on the base position selected by the first base position selection means and the shift amount input by the shift amount input means.

4. The network game system according to any one of claims 1 to 3, wherein the own object posture determination means determines the posture of the object associated with the game machine based on the base position selected by the second base position selection means and the position of the object.

5. The network game system according to any one of claim 1 to 4, wherein
the second base position selection means selects a subsequent base position from among the base positions received by the first base position receiving means, based on a current position of the object associated with the game machine.

6. The network game system according to any one of claim 1 to 5, wherein
each of the game machines further comprises direction input means for inputting direction data by a player, and
the first base position selection means selects one of the plurality of base positions input by the direction input means.

7. The network game system according to claim 6, wherein
the direction input means comprises
player's posture determination means for acquiring data indicative of posture of the player, and
direction data calculation means for calculating direction data indicative of a direction in the virtual space based on the data acquired by the player's posture determination means.

8. The network game system according to claim 7, wherein the player's posture determination means acquires, as data indicative of the posture of the player, data indicative of a position of a predetermined portion of the player.

9. The network game system according to claim 7 or 8, wherein the first base position selection means selects one of the plurality of base positions according to the direction data calculated by the direction data calculation means, when the player executes some operations relative to a predetermined operating member.

10. The network game system according to claim 9, wherein the operating member is placed in a portion below the player's feet.

11. The network game system according to any one of claims 7 to 10, wherein
the player's posture determination means comprises
a ultrasonic transmitter for transmitting a ultrasonic wave towards the player,
a plurality of ultrasonic receivers for receiving, at separate positions, the ultrasonic wave transmitted from the ultrasonic transmitter and reflected by the player, and
time measurement means for measuring respective periods of time elapsed after the ultrasonic transmitter transmits the ultrasonic wave and before the respective ultrasonic receivers receive the ultrasonic wave, and
acquires data indicative of the posture of the player based on the respective periods of time measured by the time measurement means.

12. The network game system according to any one of claims 7 to 11, further comprising game image production means for producing a game screen image containing a direction indicating image representative of a direction indicated by the direction data calculated by the direction data calculation means.

13. The network game system according to claim 8, wherein
the player's posture determination means calculates data indicative of a shift amount of a position of a head of the player relative to a reference position as the data indicative of the position of the predetermined portion of the player, and
the direction data calculation means calculates direction data indicative of a direction according to the displacement of the position of the head of the player relative to the reference position.

14. A control method for a network game system containing a plurality of game machines connected to a communication network, which share a virtual space where a plurality of objects associated with any of the plurality of game machines are placed and a plurality of base positions are defined, wherein,
each of the game machines executes:
a first base position selection step of selecting one of the plurality of base positions;
a first base position transmission step of transmitting the base position selected at the first base position selection step to another game machine;
a first base position receiving step of receiving the base position transmitted at the first base position transmission step from another game machine;
a second base position selection step of selecting one of the base positions received at the first base position receiving step;
an own object position determination step of determining a position of an object associated with the game machine based on the base position selected at the first base position selection step; and
an own object posture determination step of determining posture of the object associated with the game machine based on the base position selected at the second base position selection step.

15. A game machine connected to a communication network, for sharing with another game machine connected to the communication network a virtual space where an object is placed, comprising:
position storage means for storing a plurality of base positions defined in the virtual space;
base position selection means for selecting one of the plurality of base positions;
base position receiving means for receiving the base position selected by the other game machine;
position determination means for determining a position of the object based on the base position selected by the base position selection means; and
posture determination means for determining posture of the object based on the base position received by the base position receiving means.

16. A control method for a game machine connected to a communication network, for sharing with another game machine connected to the communication network a virtual space where an object is placed, comprising:
a base position selection step of selecting one of the plurality of base positions;
a base position receiving step of receiving the base position selected by the other game machine;
a position determination step of determining a position of the object based on the base position selected at the base position selection step; and
a posture determination step of determining posture of the object based on the base position received at the base position receiving step.

17. An information storage medium storing a program for causing a computer to function as:
means for sharing a virtual space where an object is placed with another game machine via a communication network;
position storage means for storing a plurality of base positions defined in the virtual space;
base position selection means for selecting one of the plurality of base positions;
base position receiving means for receiving the base position selected by the other game machine;
position determination means for determining a position of the object based on the base position selected by the base position selection means; and
posture determination means for determining posture of the object based on the base position received by the base position receiving means.

18. A game machine in which a player moves an object placed in a virtual space, comprising:
player's posture determination means for acquiring data indicative of posture of the player;
direction data calculation means for calculating direction data indicative of a direction in the virtual space based on the data acquired by the player's posture determination means; and
game image production means for producing a game screen image showing a picture showing the object moving in the virtual space according to the direction data calculated by the direction data calculation means.

19. The game machine according to claim 18, wherein the player's posture determination means acquires data indicative of a position of a predetermined portion of the player as the data indicative of the posture of the player.

20. The game machine according to claim 18 or 19, wherein the game image production means produces a game screen image showing a picture showing the object moving in the virtual space according to the direction data calculated by the direction data calculation means when the player executes some operation relative to a predetermined operating member.

21. The game machine according to claim 20, wherein the operating member is placed in a portion below the player's feet.

22. The game machine according to claim 18 or 21, wherein
a plurality of base positions are defined in the virtual space, and
the game image production means selects one of the plurality of base positions according to the direction data calculated by the direction data calculation means and produces a game screen image showing the object moving in the virtual space towards the base position selected.

23. The game machine according to claim 18 or 22, wherein
the player's posture determination means comprises
a ultrasonic transmitter for transmitting a ultrasonic wave towards the player,
a plurality of ultrasonic receivers for receiving, at separate positions, the ultrasonic wave transmitted from the ultrasonic transmitter and reflected by the player, and
time measurement means for measuring respective periods of time elapsed after the ultrasonic transmitter transmits the ultrasonic wave and before the respective ultrasonic receivers receive the ultrasonic wave, and
acquires data indicative of the posture of the player based on the respective periods of time measured by the time measurement means.

24. The game machine according to claim 18 to 23, wherein the game image production means produces a game screen image containing a direction indicating image indicating a direction indicated by the direction data calculated by the direction data calculation means.

25. The game machine according to claim 19, wherein
the player's posture determination means calculates data indicative of a shift amount of a position of a head of the player relative to a reference position as the data indicative of the position of the predetermined portion of the player, and
the direction data calculation means calculates direction data describing a direction according to displacement of the position of the head of the player relative to the reference position.

26. A control method for a game machine in which a player moves an object placed in a virtual space, comprising:
a player's posture determination step of acquiring data indicative of posture of the player;
a direction data calculation step of calculating direction data indicative of a direction in the virtual space based on the data acquired by the player's posture determination means; and
a game image production step of producing a game screen image showing a picture showing the object moving in the virtual space according to the direction data calculated by the direction data calculation means.

27. An information storage medium storing a program for causing a computer to function as
player's posture determination means for acquiring data indicative of posture of the player,
direction data calculation means for calculating direction data indicative of a direction in the virtual space based on the data acquired by the player's posture determination means, and
game image production means for producing a game screen image showing the object moving in the virtual space, according to the direction data calculated by the direction data calculation means.
